# EUROPÄISCHE PATENTSCHRIFT

(11) **EP 1 984 659 B1**
(45) Veröffentlichungstag und Bekanntmachung des Hinweises auf die Patenterteilung: **27.04.2011**
(21) Anmeldenummer: 07702869.4
(22) Anmeldetag: 18.01.2007
(51) Int. Cl.: F16J 15/08, F16J 15/12

(54) **FLACHDICHTUNG FÜR HOHE BEANSPRUCHUNG FÜR BRENNKRAFTMASCHINEN**
FLAT SEAL FOR HIGH LOADING FOR INTERNAL COMBUSTION ENGINES
JOINT D'ÉTANCHÉITÉ PLAT SOUMIS À DE FORTES SOLLICITATIONS POUR DES MOTEURS À COMBUSTION INTERNE

(30) Priorität: 16.02.2006 DE 102006007311
(43) Veröffentlichungstag der Anmeldung: 29.10.2008
(73) Patentinhaber: Federal-Mogul Sealing Systems Bretten GmbH, 75015 Bretten (DE)
(72) Erfinder: SALAMEH, Ralf, 75053 Gondelsheim (DE)
(74) Vertreter: Kurig, Thomas
(86) Internationale Anmeldenummer: PCT/EP2007/000436
(87) Internationale Veröffentlichungsnummer: WO 2007/093266

(56) Entgegenhaltungen:
- EP-A- 1 536 166
- EP-A- 1 577 589
- EP-A1- 0 702 174
- EP-A2- 1 298 364
- EP-B1- 1 023 549
- DE-U1- 29 804 534
- US-A- 5 478 092

## Beschreibung

Die Erfindung betrifft eine Flachdichtung für hohe Beanspruchung mit erhöhter Verschleißfestigkeit gegen Schäden durch lokale Überpressung und Relativbewegungen, insbesondere für Brennkraftmaschinen.

Flachdichtungen zeichnen sich im Vergleich zu anderen Dichtungstypen, z.B. solchen mit einem metallischen Trägerrahmen, dadurch aus, dass die verschiedenen Funktionen des Dichtelements, nämlich die Dichtfunktion sowie die Übertragung der Verschraubungskräfte, nicht voneinander getrennt sind. Die Dichtfunktion einer Flachdichtung wird durch Verpressung der Dichtung erreicht. Bei einer Funktionstrennung übernimmt dagegen der steife metallische Trägerrahmen die Funktion der Kraftübertragung und erzeugt einen definierten Dichtspalt, in dem ein elastischer Dichtungswerkstoff verpresst wird.

Bekannte Grundarten von Flachdichtungen sind zum Beispiel Papierdichtungen oder Dichtungen aus einem elastomerbeschichteten metallischen Grundträger. Dabei ist normalerweise die Elastomerbeschichtung zur Pressungserhöhung gesickt. Eine mögliche Ausführungsform ist beispielsweise in der EP 1023549 beschrieben, wobei hier das elastomere Material zusätzlich umlaufende Erhöhungen aufweist, die Dichtlippen bilden.

Solche Dichtungen werden in Bereichen eingesetzt, in denen keine besonders großen Bauteiltoleranzen ausgeglichen werden müssen. Alle diese Flachdichtungen haben gemeinsam, dass sie im Kraftfluss der Gehäuse- oder Flanschverschraubungen liegen und somit durch die Verschraubungskräfte stark belastet werden. Durch unterschiedliche Gehäuseformen und Verschraubungsanordnungen ergeben sich unterschiedliche Tragbilder im Dichtungsverlauf.

Durch Relativbewegungen und hohe Flächenpressungen zwischen den Flanschen, zwischen denen die Dichtungen eingepresst sind, können Flachdichtungen jedoch mehr oder minder stark beschädigt werden. Solche Relativbewegungen treten zum Beispiel auf, wenn Flachdichtungen in beweglichen Anordnungen eingesetzt werden, wie in einem Motor, und können nicht verhindert werden. Auch der hohe Anpressdruck kann bauformbedingt nicht wesentlich verringert werden, da ansonsten die Dichtwirkung der Flachdichtung verringert wird. Umgekehrt könnte eine weitere Erhöhung des Anpressdrucks bzw. der Verschraubungskräfte zwar die Relativbewegungen verringern, würde jedoch auch eine erhöhte Belastung der Dichtung verursachen. Die Beschädigungen und mechanischen Verschleißerscheinungen können letztendlich zu einem Versagen der Dichtfunktion führen.

Die kritischen Bereiche, in denen diese Verschleißerscheinungen hauptsächlich auftreten, liegen im allgemeinen im Bereich der Verschraubungen. Auch eine geringe Flanschfläche oder Kontaktfläche der Dichtung kann in lokalen Bereichen zu einer starken Beanspruchung führen.

Diese Art von bekannten Flachdichtungen kann daher bei lokal sehr hohen Pressungen und/oder Verformungen von Gehäusebauteilen sowie bei Relativbewegungen oft nicht eingesetzt werden. Dies gilt speziell bei höher beanspruchten Gehäusen mit hohen Verschraubungskräften und kleinen Flansch- oder Kontaktflächen. In solchen Fällen muss also oftmals eine andere, meist teurere Dichtungsbauart gewählt werden, zum Beispiel eine Dichtung mit metallischem Trägerrahmen, an der die Dichtlippen stirnseitig anvulkanisiert sind. Bei einer solchen Dichtung ist wieder eine Funktionstrennung vorhanden, da die Übertragung der Überschraubungskräfte und die Dichtfunktion von verschiedenen Teilen der Dichtung gewährleistet werden.

EP 1 577 589 A1 offenbart eine gattungsgemäße Flachdichtung.

Daher ist es Aufgabe der Erfindung, eine Flachdichtung bereitzustellen, bei der ohne Hinzufügen von zusätzlichen Bauteilen eine Entlastung dieser kritischen Bereiche erreicht wird, so dass Beschädigungen aufgrund der angesprochenen Relativbewegungen und Überpressungen verringert oder vollständig vermieden werden und so die Lebensdauer der Dichtung deutlich erhöht wird.

Die Aufgabe wird gelöst durch eine Flachdichtung nach Anspruch 1, die einen metallischen Grundträger mit mindestens einem Dichtbereich aufweist, wobei der Grundträger in mindestens einem vorbestimmten Bereich außerhalb des mindestens einen Dichtbereichs zumindest teilweise mit einer funktionalen Struktur versehen ist, welche eingeprägte Profilierungen des Grundträgers aufweist, und wobei der Grundträger mit einer Beschichtung aus einem elastomeren Material versehen ist, dadurch gekennzeichnet, dass die Dicke der elastomeren Beschichtung der Höhe der Profilierungen entspricht, so dass die Flachdichtung überall die gleiche Gesamtdicke aufweist.

Durch eine derartige aus der eigentlichen Dichtung herausgearbeitete Strukturierung wird eine Art lokale Funktionstrennung einer einstückigen Dichtung bewirkt, da nun die Kraftübertragung verstärkt oder hauptsächlich in den effektiv verdickten Bereichen der Dichtung stattfindet. Die Bereiche der Flachdichtung, welche die Dichtfunktion gewährleisten, werden damit deutlich weniger belastet. Zusätzlich wird durch die Struktur und Form der Profilierung die Reibung zwischen Dichtung und Flanschen erhöht oder sogar eine Verzahnung der Elemente bewirkt, so dass die Relativbewegungen verringert werden.

Die funktionale Struktur ist mit der elastomeren Beschichtung versehen. Eine solche Beschichtung der funktionalen Struktur kann deren Steifigkeit zusätzlich erhöhen.

Erfindungsgemäß entspricht die Dicke der elastomeren Beschichtung der funktionalen Strukturen der Höhe der Ausprägungen. Auf diese Weise liegen Kanten und obere Flächen der Struktur weiterhin frei und sorgen für eine erhöhte Reibung mit den Flanschen, während die erhöhte Steifigkeit der Struktur wie vorstehend beschrieben erhalten bleibt.

In einer bevorzugten Ausführungsform weist der Grundträger eine oder mehrere Befestigungsöffnungen auf, und die funktionalen Strukturen grenzen an diesen Befestigungsöffnungen an. Die Öffnungen dienen üblicherweise als Verschraubungslöcher, weshalb in diesen Bereichen die Presskräfte durch die Verschraubung am höchsten sind.

Bevorzugt sind die Befestigungsöffnungen kreisförmig, und jede Befestigungsöffnung ist mit einem Winkel von etwa 180° von einer funktionalen Struktur umgeben.

Es ist außerdem bevorzugt, dass die eingeprägten Profilierungen der funktionalen Struktur symmetrisch auf beiden Seiten des metallischen Grundträgers ausgeführt sind.

Bevorzugt sind die Profilierungen regelmäßig in dem Belastungsbereich verteilt. Damit wird eine möglichst gleichmäßige Belastung der Dichtung gewährleistet.

In einer Ausführungsform sind die Profilierungen durchgängig und bewirken eine Perforierung des metallischen Grundträgers. Die durchgängigen Perforierungen führen jeweils zu Kanten, die weiter zu einer Reibungserhöhung und Verzahnung bis hin zu einem plastischen Eindringen in die Flansche beitragen können.

In einer bevorzugten Ausführungsform sind die Profilelemente halbkugelförmig. Eine kugelförmige Oberfläche ist bekanntermaßen besonders stabil gegen Verformungen unter Belastung.

In einer weiteren bevorzugten Ausführungsform sind die Profilelemente zylinderförmig oder quaderförmig. Diese Form ist sehr einfach mit beliebiger Prägetiefe herzustellen und bietet eine hohe Reibung durch die an den Flanschen anliegenden Flächen.

Nach einer weiteren bevorzugten Ausführungsform sind die Profilelemente kegelförmig oder pyramidenförmig. Die Spitzen dieser Profilelemente können eine starke Verzahnung der Elemente begünstigen.

Bevorzugt ist der Grundträger der Flachdichtung aus einem Stahlblech gefertigt ist. Dies ist ein bewährtes und übliches Material für solche Trägerbleche.

Die elastomere Beschichtung kann eine Flüssig-Elastomer-Beschichtung sein, die als LEM (Liquid Elastomer Moulding) bekannt ist

Die Abmessungen einer bevorzugten Ausführungsform der Erfindung sind so, dass das Grundträgerblech eine Dicke zwischen 0,2 und 1 mm aufweist, die Gesamtdicke der Flachdichtung zwischen 0,4 und 1 mm liegt und die unbeschichtet gemessene Dicke der funktionalen Strukturen 0,4 bis 1 mm beträgt.

Es ist bevorzugt, dass die Profilierungen der funktionalen Struktur durch Prägen des Grundträgerblechs erzeugt werden.

### Kurze Beschreibung der Zeichnungen

Im folgenden wird die Erfindung mit Hilfe beispielhafter Ausführungsformen und Zeichnungen ausführlich beschrieben.
Figuren 1a und 1b zeigen die Struktur einer Flachdichtung mit elastomerer Beschichtung nach dem Stand der Technik.
Figur 2 zeigt eine Ausführungsform einer Flachdichtung mit einem Bereich, der mit einer funktionalen Struktur versehen ist.
Figur 3a zeigt einen Querschnitt durch eine Flachdichtung nach dem Stand der Technik.
Figur 3b zeigt im Querschnitt nicht eine erfindungsgemäße Ausführungsform einer Flachdichtung mit einer unbeschichteten funktionalen Struktur.
Figur 3c zeigt im Querschnitt eine nicht erfindungsgemäße Ausführungsform mit einer elastomerbeschichteten funktionalen Struktur.
Figur 3d zeigt im Querschnitt eine nicht erfindungsgemäße Ausführungsform mit einer elastomerbeschichteten funktionalen Struktur, wobei die Beschichtung erfindungsgemäß nur bis zur Höhe der Profilierungen aufgebracht ist.
Figur 4a zeigt einen schematischen Querschnitt einer Ausführungsform der funktionalen Struktur der Erfindung mit geschlossenen pyramidenförmigen oder kegelförmigen Profilelementen.
Figur 4b zeigt eine weitere Ausführungsform der funktionalen Struktur mit pyramidenförmigen/kegelförmigen Elementen, wobei die Elemente direkt aneinander angrenzen.
Figur 4c zeigt eine weitere Ausführungsform der funktionalen Struktur mit geschlossenen zylindrischen oder quaderförmigen Elemente.
Figur 4d zeigt eine weitere Ausführungsform der funktionalen Struktur mit geschlossenen halbkugelförmigen Elementen.
Figur 4e zeigt eine Ausführungsform der funktionalen Struktur der Erfindung mit offenen kegelförmigen Elementen.

### Ausführliche Beschreibung der Erfindung

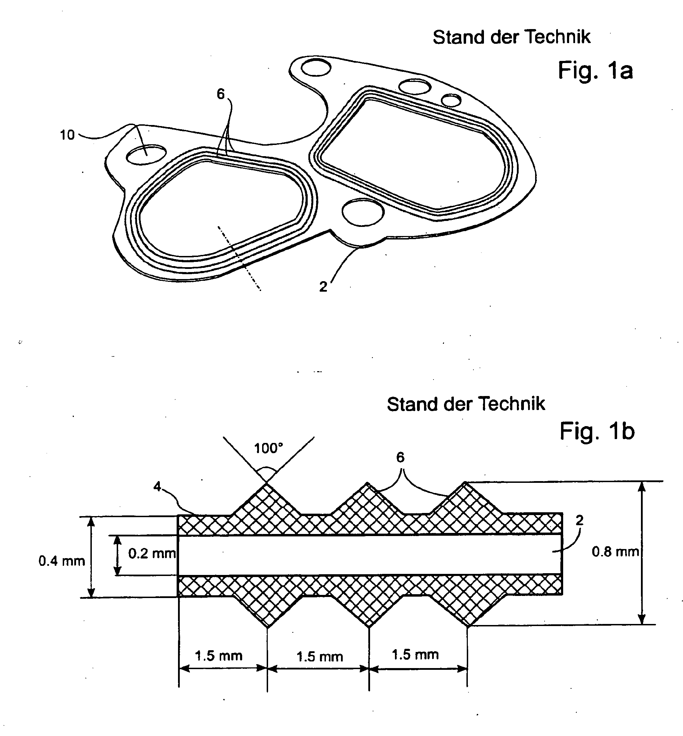

Figur 1 zeigt eine beispielhafte Flachdichtung 1 nach dem Stand der Technik. In Fig. 1a ist eine perspektivische Ansicht zu sehen, während in Fig. 1b ein Querschnitt dargestellt ist. Die Dichtung weist einen metallischen Grundträger 2 auf und ist mit einem elastomeren Material 4 beschichtet. Aus dem elastomeren Material sind außerdem mehrere, in diesem Fall drei, parallel verlaufende Dichtlippen 6 ausgebildet. Diese weisen einen dreieckigen Querschnitt auf und verlaufen, wie in Fig. 1a gezeigt, jeweils um die gesamte Dichtöffnung herum. Die Dichtung weist Befestigungsöffnungen 10 zur Verschraubung mit anderen Bauteilen auf.

Weitere Einzelheiten der Dichtung wie zusätzliche Dichtelemente, Sicken etc. sind hier nicht gezeigt, sind dem Fachmann aber bekannt. Wie in Fig. 1b gezeigt, sind beispielhafte Maße für die verschiedenen Elemente der Dichtung wie folgt: der metallische Kern 2 weist eine Dicke a von 0,2 mm auf, die Gesamtdicke x der Dichtung liegt bei 0,4 mm, so dass in diesem Beispiel auf jeder Seite eine Elastomerbeschichtung 4 von 0,1 mm Dicke aufgebracht ist. Die Dicke der Flachdichtung, gemessen bis zu den Spitzen der Dichtlippen 6, beträgt 0,8 mm. Der eingeschlossene Winkel der dreieckigen Dichtlippen 6, die jeweils 1,5 mm voneinander entfernt liegen (von Spitze zu Spitze) soll bei etwa 100° liegen. Je nach Anwendung können die Abmessungen der Flachdichtung jedoch selbstverständlich auch von diesen Werten abweichen.

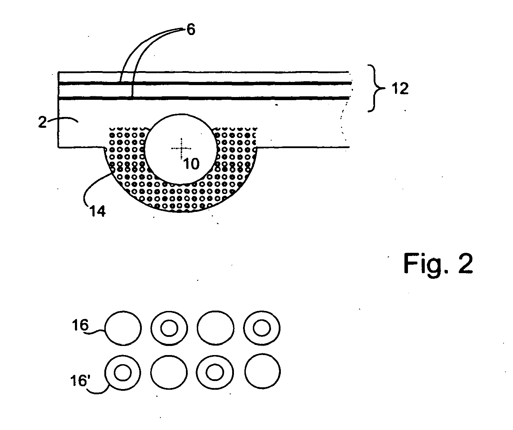

Figur 2 zeigt beispielhaft einen Ausschnitt einer Flachdichtung, die einen Bereich aufweist, der mit einer funktionalen Struktur gemäß der Erfindung versehen ist. Die Größe des strukturierten Bereichs 14 ist nicht fest vorgegeben, sondern wird je nach Einsatzzweck der Dichtung und erwarteter Belastungsverteilung bei der Herstellung gewählt. In diesem Fall befindet sich die funktionale Struktur angrenzend an einer Befestigungsöffnung 10, die zur Verschraubung der Flachdichtung 1 zwischen den Flanschen (nicht gezeigt) dient. Die Befestigungsöffnung 10 ist nur teilweise von der funktionalen Struktur 14 umgeben, und zwar bevorzugt mit einem etwa halbkreisförmigen Bereich. Auf der gegenüberliegenden Seite der Befestigungsöffnung 10 befinden sich zwei Dichtlippen 6, welche nicht Teil der Erfindung sind, so dass dort keine funktionale Struktur möglich ist. Der abdichtende Bereich, der auch die Dichtlippen umfasst, wird im folgenden mit 12 bezeichnet. Die schematische Vergrößerung der funktionalen Struktur zeigt die regelmäßig abwechselnde und beidseitig symmetrische Anordnung einzelner Profilelemente 16 und 16', wobei mit 16 die von einer Seite eingeprägten Elemente bezeichnet sind und die von der anderen Seite des Grundträgers her eingeprägten, ansonsten identischen Elemente mit 16' bezeichnet sind. Die genaue Form dieser funktionalen Struktur wird im folgenden näher beschrieben.

Da die kritischen Belastungen im Allgemeinen zwar aufgrund der Kraftübertragung durch die Verschraubung im Bereich der Befestigungsöffnungen bzw. Verschraubungslöcher 10 auftreten, jedoch nicht ausschließlich dort, können derartige funktionale Strukturen 14 alternativ oder zusätzlich auch an anderen geeigneten Stellen auf einer Flachdichtung angebracht werden, wobei der Bereich der funktionalen Strukturen 14 außerhalb der Dichtbereiche 12 liegen muss, um die Dichtfunktion weiter zu gewährleisten. Die günstigste Lage dieser Stellen, die sich aus der Belastungsverteilung der Dichtung ergibt, kann mittels einem beliebigen geeigneten Verfahren ermittelt werden. Starke Belastungen und Verschleißerscheinungen treten unter anderem auch bei sehr kleinen Flanschflächen und Kontaktflächen der Dichtung auf.

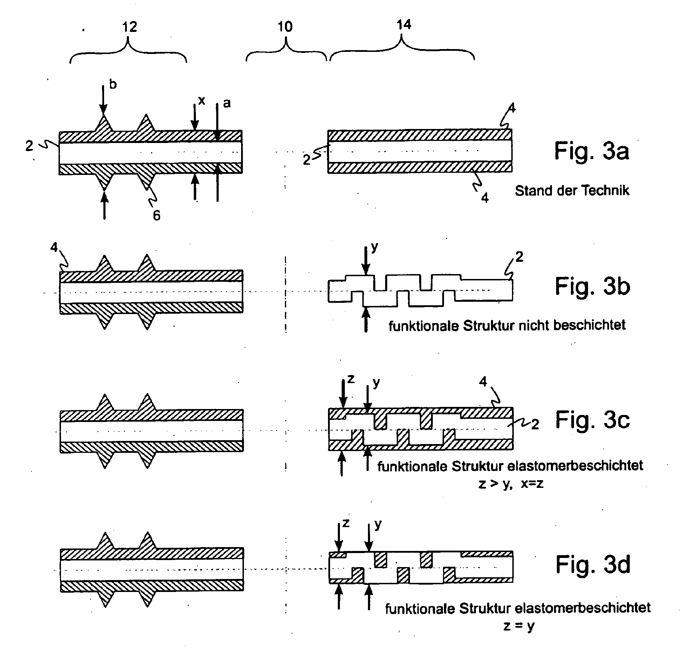

In Fig. 3 sind Querschnitte durch verschiedene Ausführungsformen von Flachdichtungen dargestellt. Fig. 3a ist ein Querschnitt durch eine Ausführungsform nach dem Stand der Technik, also ohne eingeprägte funktionale Struktur. Die verschiedenen Bereiche entsprechen ansonsten den in Fig. 2 gezeigten Bereichen. In der Mitte befindet sich wie auch in Fig. 1 der Grundträger 2, der aus einem Metallblech besteht. Dieser Grundträger 2 ist beidseitig mit einem Elastomer 4 beschichtet, und zwar in diesem Beispiel sowohl im Befestigungsbereich, der an die Befestigungsöffnung 10 angrenzt, als auch im Dichtbereich 12. Dabei sind auf beiden Oberflächen der Dichtung jeweils zwei Dichtlippen 6 zu sehen, die aus der elastomeren Beschichtung 4 ausgeformt sind. Die elastomeren Dichtlippen 6 weisen bevorzugt einen dreieckigen Querschnitt auf, könnten aber auch in anderer Form vorliegen; außerdem ist die Ausführung, Anzahl und Anordnung der Dichtlippen 6 von der Anwendung abhängig und variabel, wie für den Fachmann selbstverständlich sein wird. Die Dichtlippen 6 sind nicht Teil der Erfindung.

Als Vergleich zu dieser beschichteten Flachdichtung nach dem Stand der Technik ist in Fig. 3b eine unbeschichtete nicht erfindungsgemäße Flachdichtung gezeigt. Hier ist der Grundträger 2 im Dichtbereich identisch zu der in Fig. 3a gezeigten Dichtung, d.h. beidseitig mit einem Elastomer 4 beschichtet und mit Dichtlippen 6 versehen. Der Befestigungsbereich jedoch unterscheidet sich deutlich. Dieser Bereich 14 wurde mit beidseitigen symmetrischen Profilierungen bzw. Strukturierungen versehen, und außerdem ist dieser Bereich 14, der im folgenden als funktionale Struktur bezeichnet wird, nicht elastomerbeschichtet. Die Profilierungen können in verschiedenen geeigneten Formen erzeugt werden und werden bevorzugt aus dem Trägerblech von beiden Seiten hohlgeprägt. Die Erhöhungen im Bereich der funktionalen Struktur wirken wie eine lokale Verdickung des Grundträgers der Flachdichtung, ohne zusätzliches Material zu benötigen. Die Struktur der Profilierung trägt außerdem einerseits zur Erhöhung der Reibung bei, wie nachstehend dargelegt wird; andererseits lassen sich über die Form der Profilierung auf vielseitige Weise die Steifigkeit und die Verformungseigenschaften der Dichtung beeinflussen. Auf diese Weise wird die Belastung der Dichtung bezüglich Flächenpressung und Relativbewegung auf unkritische Werte reduziert, was in Folge zu einer deutlich verringerten Abnutzung der Dichtung führt und somit eine höhere Lebensdauer ermöglicht.

Die Trägerblechdicke a kann wie bereits bei der Flachdichtung nach dem Stand der Technik in einer Ausführungsform zwischen etwa 0,2 bis 1 mm liegen, wobei die Gesamtdicke x zusammen mit der elastomeren Beschichtung bei insgesamt etwa 0,4 bis 1,2 mm liegt. Im Bereich der funktionalen Struktur liegt die Dicke y, die sich vom unteren Ende der Profilerhebungen 16, 16' bis zum oberen Ende der Profilierungen erstreckt, bei etwa 0,3 bis 1 mm.

Ein ähnliches nicht erfindungsgemäßes Ausführungsbeispiel ist in Fig. 3c zu sehen, wobei nun wiederum das gesamte Dichtelement mit einer Elastomerbeschichtung 4 versehen ist, auch der Bereich der funktionalen Struktur 14. Die Beschichtung 4 kann so dick sein, dass die gesamte Flachdichtung, also sowohl im Dichtbereich 12 wie auch im Bereich der funktionalen Struktur 14, die gleiche Gesamtdicke z = x aufweist, wobei die Beschichtung 4 so dick ist, dass sie über die funktionale Struktur hinaus geht. Alternativ kann das Elastomer wie in Fig. 3d nur bis zu einer solchen Höhe z aufgebracht werden, dass die durch die Profilierungen 16, 16' entstehenden Vertiefungen erfindungsgemäß genau ausgefüllt werden. Die restliche Flachdichtung wird dann erfindungsgemäß aber nicht in Figur 3d gezeigt, so beschichtet, dass die Flachdichtung überall die gleiche Gesamtdicke aufweist. Eine Füllung oder Beschichtung der Profilierungen mit dem Elastomer bewirkt eine zusätzliche Erhöhung der Steifigkeit in diesem Bereich und beeinflusst die Verformungskennlinie der Flachdichtung. Abgesehen von der Beschichtungsdicke sind beispielsweise Abmessungen wie vorstehend zur Beschreibung von Fig. 3b angegeben möglich.

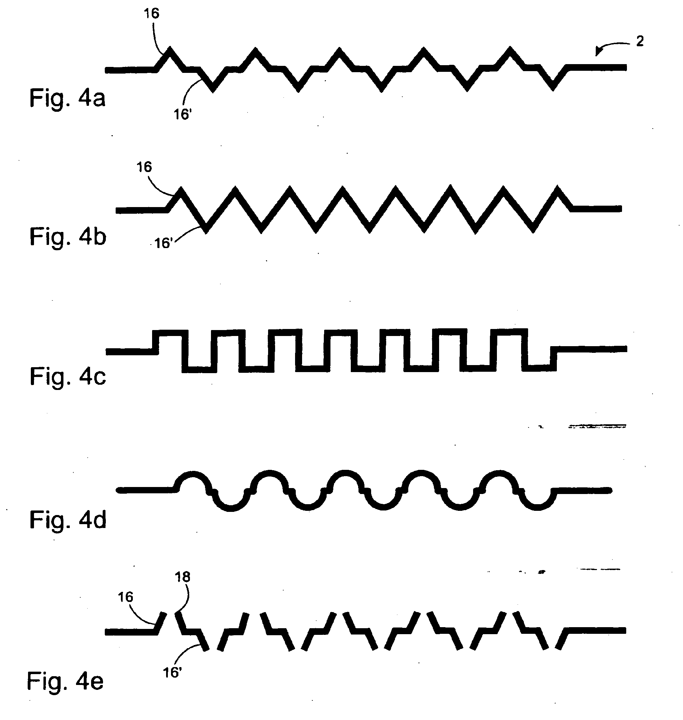

Die Profilierungen bzw. die funktionale Struktur in den kritischen Bereichen können in einer Vielzahl verschiedener Formen ausgeführt und angeordnet sein. Bevorzugt sind die Profilierungen beidseitig ausgeführt, also durch Prägung in beide Richtungen des Metallträgerblechs. Dabei umfasst die funktionale Struktur 14 bzw. die Profilierung eine Vielzahl von einzelnen Profilelementen 16, 16' geeigneter Form, die über den gewünschten Bereich verteilt von beiden Seiten eingeprägt sind. Dabei ist für eine gleichmäßige Kraftverteilung und Verzahnungswirkung vorteilhaft, dass die Profilelemente 16, 16' symmetrisch und abwechselnd von beiden Seiten geprägt werden, wie es aus Figuren 3 und 4 ersichtlich ist.

So könnten die Profilierungen pyramidenförmige oder kegelförmige Elemente umfassen, die also senkrecht zur Ebene der Flachdichtung nach außen hin spitz zulaufen, wie in Fig. 4a und 4b gezeigt. Die Spitzen einer solchen Form können zusätzlich zu der effektiven Verdickung der Dichtung an dieser Stelle eine Verzahnung der Profilierungen mit den daran angrenzenden Flanschen bewirken. Eine größere Auflagefläche und damit höhere Reibung wird beispielsweise durch zylindrische oder quaderförmige Elemente erreicht, die in Fig. 4 c wiederum im Querschnitt dargestellt sind. Die Profilierungen könnten auch in der Form halbkugelförmiger Profilelemente vorliegen (siehe Fig. 4d), wodurch Belastungen besonders gleichmäßig und effektiv verteilt werden. Darüber hinaus ist jede beliebige geeignete Form denkbar. Das Ziel soll bei allen Ausführungsformen sein, eine Oberfläche zu erzeugen, die einer Verdickung des metallischen Grundträgers gleichkommt. Dabei wird außerdem die Geometrie der Profilierungen so gewählt, dass es in diesen Bereichen zu einer Erhöhung der Reibbeiwerte bis hin zu einer Verzahnungswirkung zwischen der Dichtung und den Flanschen kommt und dadurch die Relativbewegungen zwischen den Bauteilen minimiert werden. Auf diese Weise dient die funktionale Struktur als eine Art Kraft- und Wegbegrenzer für die Dichtung.

In verschiedenen Ausführungsformen können die funktionalen Strukturen außerdem so geformt sein, dass Teile der funktionalen Struktur plastisch in die Flanschoberfläche eindringen und die Bauteile fixieren. Dies gilt aufgrund der unterschiedlichen Härte der Materialien insbesondere dann, wenn wie üblich als Grundträgermaterial der Flachdichtung ein Stahlblech verwendet wird und die Flansche aus Aluminium gefertigt sind. Eine solche Fixierung kann zum Beispiel erreicht werden, wenn wie oben beschrieben spitz zulaufende Profilelemente gewählt werden. Eine weitere Möglichkeit ist, die Profilierungen so zu erzeugen, dass das Trägerblech perforiert wird, d.h. mit offenen Profilelementen, wie in Fig. 4e gezeigt. In dieser beispielhaften Ausführungsform sind die Profilelemente 16 und 16' kegelförmig und offen ausgebildet, so dass jeweils etwa kreisförmige Kanten 18 des Trägerbleches entstehen, die dann mit den Flanschen greifen können.

Die Größe der funktionalen Struktur kann in jeder Hinsicht an die Bauteilgegebenheiten angepasst werden, zum Beispiel an verwendete Materialien, wirkende Kräfte und besondere Belastungen, etc. Dabei ist selbstverständlich sowohl die Fläche des geprägten Bereichs als auch die Größe der einzelnen Profilelemente variabel. Die Elemente können jeweils direkt aneinander angrenzen, sie können sich aber auch in gleichmäßigen Abständen zueinander befinden. Diese beiden Möglichkeiten sind einander als Vergleich für den Fall der kegel- oder zylinderförmigen Profilelemente in Fig. 4a und 4b gegenübergestellt. Selbstverständlich gilt dies auch für die übrigen möglichen Ausführungsformen, wurde dort jedoch nicht mehr einzeln aufgeführt. Außerdem besteht die Möglichkeit, Profilelemente unterschiedlicher Form innerhalb eines strukturierten Bereichs zu kombinierten, so dass zum Beispiel abwechselnd verschiedene Formen nebeneinander angebracht werden, um so die Vorteile zweier Ausführungsformen optimal zu vereinen.

Da diese Art von Flachdichtung mit Metallträger typischerweise vom Coil gefertigt wird und verschiedene Prozessschritte bis hin zum Ausstanzen der Dichtung durchläuft, kann die Erzeugung der funktionalen Struktur ohne besonderen Aufwand sehr einfach in den Stanzprozess integriert werden. Dabei ist auch denkbar, dass zur Vereinfachung verschiedene standardisierte Prägestempel mit häufig wiederkehrenden Elementen, wie z.B. Schraubenprofile M6 oder M8, eingesetzt werden. Die herausgeprägte funktionale Struktur kann durch ihre Geometrie und die dadurch hervorgerufene Umformung sowie durch Kaltverfestigungsvorgänge in ihrer Steifigkeit gezielt beeinflusst werden, um für die jeweilige Anwendung ideale Ergebnisse zu erhalten.

Somit sind zur erfindungsgemäßen Anpassung der Flachdichtung auch an hohe Verpressungskräfte und starke Relativbewegungen keine weiteren Elemente nötig, und eine einfache Integration in bestehende Fertigungsprozesse ist möglich.

Vorstehend wurden verschiedene Ausführungsformen der Erfindung dargestellt und beschrieben. Dabei ist es jedoch für den Fachmann offensichtlich, dass diese nur als Beispiele genannt wurden und den Schutzbereich der Erfindung nicht einschränken sollen. Veränderungen im Rahmen der beigefügten Schutzansprüche sind auf verschiedene Weise möglich.

## Patentansprüche

1. Flachdichtung für hohe Beanspruchung, umfassend einen metallischen Grundträger (2) mit mindestens einem Dichtbereich (12),
wobei der Grundträger (2) in mindestens einem vorbestimmten Bereich außerhalb der Dichtbereiche (12) zumindest teilweise mit einer funktionalen Struktur (14) versehen ist, welche eingeprägte Profilierungen (16, 16') des Grundträgers (2) aufweist; und wobei der Grundträger (2) mit einer Beschichtung (4) aus einem elastomeren Material versehen ist;
**dadurch gekennzeichnet, dass** die Dicke der elastomeren Beschichtung (4) der Höhe der Profilierungen (16, 16') entspricht, so dass die Flachdichtung überall die gleiche Gesamtdicke aufweist.

2. Flachdichtung nach Anspruch 1, wobei der Grundträger (2) eine oder mehrere Befestigungsöffnungen (10) umfasst, und wobei die funktionalen Strukturen (14) an den Befestigungsöffnungen angrenzen.

3. Flachdichtung nach Anspruch 2, wobei die Befestigungsöffnungen (10) kreisförmig
sind, und wobei jede Befestigungsöffnung (10) mit einem Winkel von etwa 180° von einer funktionalen Struktur (14) umgeben ist.

4. Flachdichtung nach einem der vorherigen Ansprüche, wobei die eingeprägten Profilierungen (16, 16') symmetrisch und abwechselnd auf beiden Seiten des metallischen Grundträgers ausgeführt sind.

5. Flachdichtung nach einem der vorherigen Ansprüche, wobei die Profilierungen (16, 16') durchgängig sind und eine Perforierung des metallischen Grundträgers (2) bewirken.

6. Flachdichtung nach einem der vorherigen Ansprüche, wobei die Profilierungen (16, 16') regelmäßig über den vorbestimmten Bereich der funktionalen Struktur (14) verteilt sind.

7. Flachdichtung nach einem der vorherigen Ansprüche, wobei die einzelnen Profilelemente (16, 16') halbkugelförmig sind.

8. Flachdichtung nach einem der vorherigen Ansprüche, wobei die Profilelemente (16, 16') zylinderförmig oder quaderförmig sind.

9. Flachdichtung nach einem der vorherigen Ansprüche, wobei die Profilelemente (16, 16') kegelförmig sind.

10. Flachdichtung nach einem der vorherigen Ansprüche, wobei die Profilelemente (16, 16') pyramidenförmig sind.

11. Flachdichtung nach einem der vorherigen Ansprüche, wobei der Grundträger (2) aus einem Stahlblech gefertigt ist.

12. Flachdichtung nach einem der vorherigen Ansprüche, wobei das Grundträgerblech (2) eine Dicke (a) zwischen 0,2 und 1 mm aufweist, die Gesamtdicke (x) der Flachdichtung zwischen 0,4 und 1 mm liegt und die unbeschichtet gemessene Dicke (y) der funktionalen Strukturen 0,4 bis 1 mm beträgt.

13. Flachdichtung nach einem der vorherigen Ansprüche, wobei die Profilierungen der funktionalen Struktur (14) durch Prägen erzeugt werden.

## Claims

1. Flat seal for high stress, comprising a metallic base support (2) with at least one sealing region (12),
in which the base support (2) is provided in at least one pre-determined region outside the sealing regions (12) at least partially with a functional structure (14), which has impressed profilings (16, 16') of the base support (2);
in which the base support (2) is provided with a coating (4) of an elastomer material; **characterized in that** the thickness of the elastomer coating (4) corresponds to the height of the profilings (16, 16') so that the flat seal has the same total thickness all over.

2. Flat seal according to claim 1, in which the base support (2) comprises one or more fastening openings (10), and in which the functional structures (14) are adjacent to the fastening openings.

3. Flat seal according to claim 2, in which the fastening openings (10) are circular, and in which each fastening opening (10) is surrounded at an angle of approximately 180° by a functional structure (14).

4. Flat seal according to any of the preceding claims, in which the impressed profilings (16, 16') are formed symmetrically and alternately on both sides of the metallic base support.

5. Flat seal according to any of the preceding claims, in which the profilings (16, 16') are continous and bring about a perforating of the metallic base support (2).

6. Flat seal according to any of the preceding claims, in which the profilings (16, 16') are distributed uniformly over the predetermined region of the functional structure (14).

7. Flat seal according to any of the preceding claims, in which the individual profile elements (16, 16') are hemispherical.

8. Flat seal according to any of the preceding claims, in which the profile elements (16, 16') are cylindrical or parallelepiped in shape.

9. Flat seal according to any of the preceding claims, in which the profile elements (16, 16') are tapered.

10. Flat seal according to any of the preceding claims, in which the profile elements (16, 16') are pyramidal.

11. Flat seal according to any of the preceding claims, in which the base support (2) is made from a steel plate.

12. Flat seal according to any of the preceding claims, in which the base support plate (2) has a thickness (a) between 0.2 and 1 mm, the total thickness (x) of the flat seal is between 0.4 and 1 mm and the uncoated measured thickness (y) of the functional structures is 0.4 to 1 mm.

13. Flat seal according to any of the preceding claims, in which the profilings of the functional structure (14) are produced by impressing.

## Revendications

1. Joint d'étanchéité plat soumis à de fortes sollicitations comprenant un support de base métallique (2) avec au moins une zone d'étanchéité (12), sachant que le support de base (2) est muni, dans au moins une zone prédéterminée hors des zones d'étanchéité (12), au moins partiellement d'une structure fonctionnelle (14), laquelle présente des profilages gravés (16, 16') du support de base (2) ; et sachant que le support de base (2) est muni d'un revêtement (4) en matériau élastomère ;
**caractérisé en ce que** l'épaisseur du revêtement (4) élastomère correspond à la hauteur des profilages (16, 16'), de façon à ce que le joint d'étanchéité plat présente partout la même épaisseur totale.

2. Joint d'étanchéité plat selon la revendication 1, dans lequel le support de base (2) comprend une ou plusieurs ouverture(s) de fixation (10) et dans lequel les structures fonctionnelles (14) avoisinent les ouvertures de fixation.

3. Joint d'étanchéité plat selon la revendication 2, dans lequel les ouvertures de fixation (10) sont circulaires et dans lequel chaque ouverture de fixation (10) est entourée d'une structure fonctionnelle (14) avec un angle d'environ 180°.

4. Joint d'étanchéité plat selon l'une des revendications précédentes, dans lequel les profilages gravés (16, 16') sont dirigés de manière symétrique et alternante sur les deux côtés du support de base métallique.

5. Joint d'étanchéité plat selon l'une des revendications précédentes, dans lequel les profilages (16, 16') sont traversants et effectuent une perforation du support de base métallique (2).

6. Joint d'étanchéité plat selon l'une des revendications précédentes, dans lequel les profilages (16, 16') sont répartis régulièrement sur la zone prédéfinie de la structure fonctionnelle (14).

7. Joint d'étanchéité plat selon l'une des revendications précédentes, dans lequel les différents éléments de profilé (16, 16') sont hémisphériques.

8. Joint d'étanchéité plat selon l'une des revendications précédentes, dans lequel les éléments de profilé (16, 16') sont cylindriques ou parallélépipédiques.

9. Joint d'étanchéité plat selon l'une des revendications précédentes, dans lequel les éléments de profilé (16, 16') sont coniques.

10. Joint d'étanchéité plat selon l'une des revendications précédentes, dans lequel les éléments de profilé (16, 16') sont pyramidaux.

11. Joint d'étanchéité plat selon l'une des revendications précédentes, dans lequel le support de base métallique (2) est réalisé dans une tôle d'acier.

12. Joint d'étanchéité plat selon l'une des revendications précédentes, dans lequel la tôle du support de base métallique (2) présente une épaisseur (a) entre 0,2 et 1 mm, l'épaisseur totale (x) du joint d'étanchéité plat est située entre 0,4 et 1 mm et l'épaisseur non revêtue mesurée (y) des structures fonctionnelles est de 0,4 à 1 mm.

13. Joint d'étanchéité plat selon l'une des revendications précédentes, dans lequel les profilages de la structure fonctionnelle (14) sont produits par gravage.
